Europäisches Patentamt

European Patent Office

Office européen des brevets

(19)

(11) EP 0 964 582 A1

## (12) DEMANDE DE BREVET EUROPEEN

(43) Date de publication:
**15.12.1999 Bulletin 1999/50**

(51) Int Cl.⁶: **H04N 7/30**

(21) Numéro de dépôt: **99401149.2**

(22) Date de dépôt: **10.05.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **08.06.1998 FR 9807161**

(71) Demandeur: **ALCATEL**
**75008 Paris (FR)**

(72) Inventeur: **Planes, Jean-Guy**
**31270 Frouzins (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Dispositif pour la compression et la transmission de données, notamment d'images numériques, sur un canal à débit constant**

(57)     Dispositif de traitement en vue de la transmission de données, notamment de données images, dans un canal de transmission à débit constant, comportant :

- un moyen de compression (C) des données,
- un moyen de régulation (R) possédant en entrée au moins un objectif de compression (OC) correspondant à au moins un critère de compression (CC), et au moins une mesure d'au moins une information caractéristique (IC) de tout ou partie des données, et fournissant à l'adresse du moyen de compression (C) un paramètre de compression (PC),
- et un moyen de mémorisation (M) des données sortant du moyen de compression (C).

**FIG. 2**

EP 0 964 582 A1

**Description**

La présente invention concerne un dispositif de traitement du signal localisé entre un capteur et un organe de transmission à débit constant. Elle s'applique particulièrement bien aux systèmes d'observation, notamment par satellite, qui acquièrent des données de type données d'image, et les transmettent vers une station au sol par un canal de communication à débit constant.

Il s'avère que les canaux de communication utilisés sont limités en débit, de sorte qu'un problème se pose par exemple pour la transmission d'images numériques, qui sont des données particulièrement coûteuses en volume d'information.

Pour résoudre ce problème, une solution classique est d'inclure dans le dispositif de traitement du signal, un moyen de compression de données. On arrive par cette technique à mieux utiliser les canaux de communication en augmentant la quantité d'information que l'on peut y véhiculer.

Les techniques de compression de données sont extrêmement nombreuses et diverses. Toutefois, elles se basent toutes sur la suppression, ou tout du moins la réduction, de la redondance dans le signal source.

Dans la mesure où cette caractéristique de redondance n'est pas uniformément répartie (sauf cas d'espèce) dans le signal source, l'efficacité de la compression varie au cours du temps. Par conséquent, à taux de compression constant, le débit en sortie de l'organe de compression varie au cours du temps.

En prenant pour exemple une photographie prise depuis un satellite, on imagine sans peine qu'il est plus facile de compresser l'étendue uniforme d'un océan que des zones plus mouvementées comme des villes.

Or, comme nous l'avons précédemment évoqué, le canal de transmission est généralement à débit constant. Il se pose donc un problème de régulation de débit.

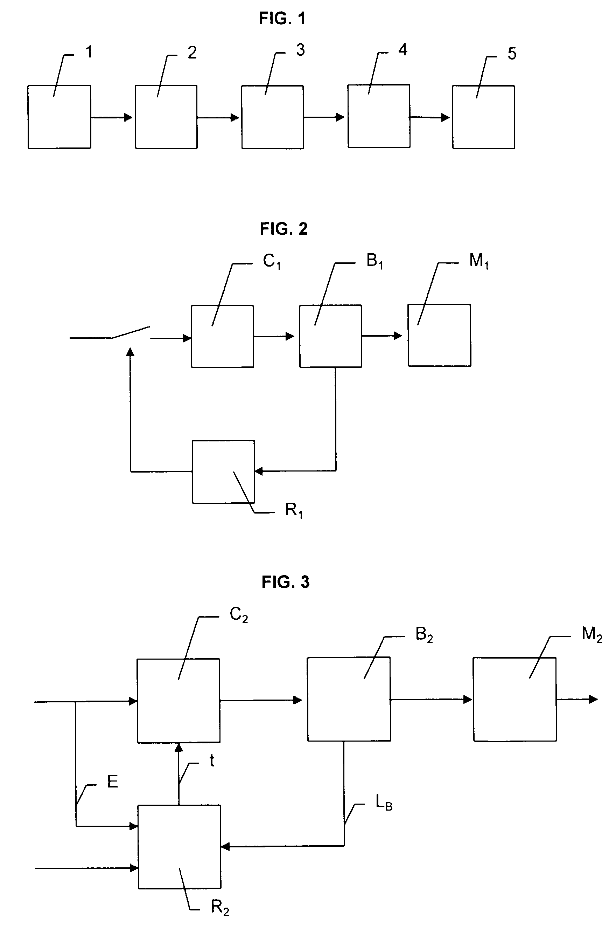

La figure 1 illustre de façon extrêmement schématique l'architecture d'un dispositif de traitement du signal dans le contexte de l'invention. Cette architecture prend la forme d'une chaîne de traitement le long de laquelle s'enchaînent plusieurs éléments.

L'élément référencé 1 est un capteur. Il peut par exemple s'agir d'une caméra optique ou infrarouge embarquée sur un satellite d'observation.

L'élément 2 est un moyen de compression.

L'élément 3 est un moyen de régulation de débit.

L'élément 4 est une mémoire de masse qui sert d'antémémoire (ou mémoire cache) à l'élément de transmission 5. En effet, dans le cas d'un satellite d'observation, le canal de transmission n'est pas toujours disponible, notamment du fait de la limitation temporelle de la visibilité entre le satellite et les stations au sol. Il faut donc être en mesure de mémoriser les données pendant ces périodes de non-disponibilité du canal de transmission.

Le flux de données peut ou non passer par la mémoire de masse 4, en fonction de la disponibilité du canal de transmission.

Une première solution de mise en oeuvre du moyen de régulation est schématiquement illustrée par la figure 2.

Une mémoire tampon $B_1$ (pour *buffer* en anglais) est insérée entre le moyen de compression $C_1$ et la mémoire de masse $M_1$. Un moyen de régulation $R_1$ permet de détecter lorsque la mémoire tampon $B_1$ est pleine, et d'alors interrompre l'acquisition de données.

Afin de respecter la contrainte de débit constant sur le canal de transmission, des données non significatives sont transmises quand la mémoire $B_1$ est vide.

Ainsi, le débit sur le canal de transmission n'est pas optimal puisque des données non significatives sont transmises. Cette solution n'est donc pas satisfaisante.

Une seconde solution est divulguée par le brevet français 2 707 070, intitulé *Dispositif de traitement d'images à compression à débit variable* dont le titulaire est le Centre National d'Études Spatiales (CNES). Ce dispositif est schématiquement illustré par la figure 3.

Comme dans la solution précédente, une mémoire tampon $B_2$ est insérée entre le moyen de compression $C_2$ et la mémoire de masse $M_2$. Un moyen de régulation $R_2$ a connaissance du niveau $L_B$ de remplissage de la mémoire tampon $B_2$ et d'une estimation E de la quantité d'information contenue dans les données avant compression. En fonction de ces deux paramètres et d'une loi de régulation f, le moyen de régulation $R_2$ détermine un taux de compression t par $t = f(E, L_B)$.

Selon cette solution, lorsque la quantité d'information, mesurée par l'estimateur E, est importante pendant une certaine durée (le niveau $L_B$ devient alors important aussi), le taux de compression t est augmenté, pour éviter la saturation de la mémoire tampon $B_2$.

Il résulte de ce mécanisme que la dégradation des données par le moyen de compression est proportionnelle à la quantité d'information qu'elles contiennent. Autrement dit, pour reprendre l'exemple de la photographie par satellite, les données concernant les villes, *a priori* les données les plus intéressantes, sont défavorisées au profit des données relatives aux étendues uniformes telles les océans qui présentent peu d'intérêts dans la plupart des cas, car comportant peu d'informations.

De plus, le taux de compression ne représente pas nécessairement le critère qualifiant le besoin de l'utilisateur des données. Généralement, cela sera plutôt un critère comme la qualité des images.

Par conséquent, cette solution peut s'avérer inacceptable, ou, tout du moins insuffisante.

Le but de la présente invention est de proposer un dispositif de traitement du signal ne comportant pas les inconvénients de l'état de la technique, notamment en proposant à l'utilisateur de préciser une consigne facilement interprétable par lui, comme, par exemple, une mesure de la qualité des images.

Pour cela, l'objet de la présente invention est un dispositif de traitement en vue de la transmission de données, notamment de données images, dans un canal de transmission à débit constant, comportant :

- un moyen de compression (C) desdites données,
- un moyen de régulation (R) possédant en entrée au moins un objectif de compression (OC) correspondant à au moins un critère de compression (CC), et au moins une mesure d'au moins une information caractéristique (IC) de tout ou partie desdites données, et fournissant audit moyen de compression (C) un paramètre de compression (PC) dépendant exclusivement dudit au moins un objectif de compression (OC) et de ladite au moins une information caractéristique (IC),
- et un moyen de mémorisation (M) des données sortant dudit moyen de compression (C).

Le critère de compression (CC) peut être formé d'au moins un des éléments suivants :

- une erreur quadratique moyenne,
- un taux de compression,
- un rapport signal à bruit.

L'information caractéristique (IC) peut être formée d'au moins un des éléments suivants :

- une mesure de l'entropie desdites données,
- une mesure de complexité desdites données.

Le paramètre de compression (PC) peut être un pas de quantification, et le moyen de compression (C) peut comporter un moyen de quantification ($M_Q$).

Une mémoire tampon (B) peut être insérée entre ledit moyen de mémorisation (M) et ledit moyen de compression (C).

Les différents avantages et caractéristiques de l'invention apparaîtront de façon plus claire dans la description qui va suivre en référence aux figures annexées.

La figure 1, déjà commentée, illustre de façon extrêmement schématique l'architecture d'un dispositif de traitement du signal dans le contexte de l'invention.

Les figures 2 et 3, également déjà commentées, illustrent deux solutions selon l'état de la technique.

La figure 4 illustre schématiquement la solution selon la présente invention.

La figure 5 représente une décomposition classique d'un moyen de compression de données de type données d'images.

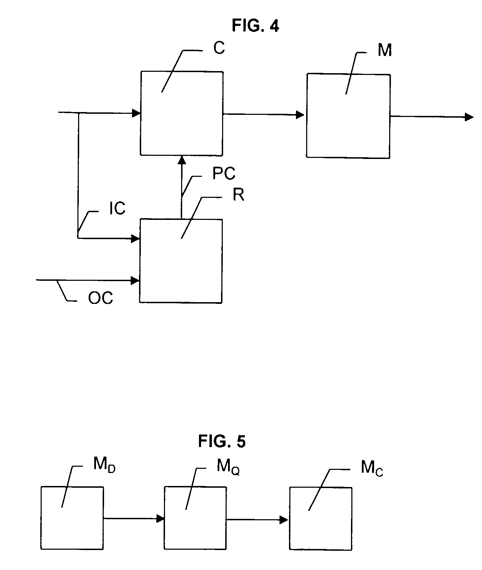

Ainsi qu'il est illustré par la figure 4, le dispositif selon l'invention comporte au moins un moyen de compression C, un moyen de régulation R et une mémoire M, préférentiellement une mémoire de masse.

## 1. Moyen de compression

Le moyen de compression C utilisé par le dispositif selon l'invention peut être un moyen de compression conforme à l'état de la technique.

En particulier, celui-ci peut se décomposer en trois éléments, ainsi qu'il est bien connu et ainsi qu'il est illustré par la figure 5. Ces trois éléments sont un module de décorrélation ($M_D$), un module de quantification ($M_Q$) et un module de codage ($M_C$).

Cette architecture du moyen de compression C est souvent utilisée couplée avec un algorithme du type dit JPEG (pour *Joint Photographic Expert Group,* en anglais).

Le module de décorrélation $M_D$ peut être vu comme un module de mise en forme des données, afin qu'elles soient traitées avec le maximum d'efficacité par le module de quantification $M_Q$. Dans le cas d'une compression de type JPEG, la décorrélation des données se fait par une transformation en cosinus discrète (ou DCT pour *Discrete Cosine Transform* en anglais).

C'est au niveau de ce module de quantification $M_Q$ que l'essentiel de la compression a lieu. Le module de quantification $M_Q$ est typiquement paramétré par un pas de régulation. Plus le pas de quantification est important, plus la compression (et, donc, la dégradation) est importante. Inversement, plus le pas de quantification est faible, plus la compression est faible.

## 2. Moyen de régulation

Le moyen de régulation R possède deux entrées : l'une consiste en un objectif de compression correspondant à un critère de compression ; l'autre est une mesure d'une information caractéristique des données à compresser.

### 2.1. Objectifs et critères de compression

La première entrée du moyen de régulation R est un objectif de compression OC qui est constitué d'un critère de compression CC, et d'une ou de plusieurs valeurs seuils.

Cet objectif de compression OC peut être fourni par un moyen de traitement automatique de données ou par un expert, à partir d'une expression d'un besoin utilisateur BU.

Ce besoin utilisateur BU peut être exprimé de façon subjective. Il peut par exemple s'agir d'expressions telles que « bonne qualité ». Cette expression doit donc être convertie par le moyen de traitement automatique ou par l'expert en un objectif de compression OC.

Plus précisément, la même expression (par exemple « bonne qualité ») peut donner des objectifs de compression OC différents en fonction du type d'utilisateur des données. Ainsi, si l'utilisateur des données a besoin des données à des fins d'études agricoles, une bonne qualité signifiera que les champs cultivés apparaissent clairement ainsi que les cours d'eau. Si l'utilisateur des données agit dans le domaine militaire, une bonne qualité signifiera qu'un grand nombre de détails topologiques apparaissent avec netteté.

Un premier exemple de critère de compression CC peut être un taux de compression, qui peut être défini comme le rapport de la taille des données en entrée sur la taille des données en sortie du dispositif.

L'objectif de compression OC peut alors être de ne pas dépasser une certaine valeur pour ce critère de compression.

Un autre objectif de compression OC peut être de maintenir le critère de compression CC dans une fourchette de valeurs, déterminée par deux valeurs extrémales.

Un autre exemple peut être un critère sur la qualité de la compression, par exemple une erreur quadratique moyenne (EQM) entre les données avant compression et les données reconstruites (c'est-à-dire compressées, puis décompressées).

Dans le cas où lesdites données appartiennent à une image numérique, l'erreur quadratique moyenne peut s'exprimer par une équation de la forme :

$$\frac{1}{N_L \cdot N_C} \cdot \sum_{i=1}^{N_L} \sum_{j=1}^{N_C} \left( x_{i,j} - \tilde{x}_{i,j} \right)^2$$

dans laquelle $N_L$ et $N_C$ sont respectivement le nombre de lignes et le nombre de colonnes de toute ou partie de l'image à compresser, $x_{i,j}$ est la valeur du pixel de coordonnées i, j avant la compression, et $\tilde{x}_{i,j}$ est la valeur du pixel de coordonnées i, j après compression puis décompression. Il s'agit donc là d'une mesure de la dégradation due à la compression.

Une variante qui mesure elle aussi la dégradation engendrée par la compression consiste à calculer un rapport signal à bruit. Ce rapport signal à bruit peut par exemple s'exprimer sous la forme :

$$\frac{\sum_{i=1}^{N_L} \sum_{j=1}^{N_C} x_{i,j}^2}{EQM}$$

$x_{i,j}$, $N_L$, $N_C$ étant définis précédemment, et EQM pouvant être l'erreur quadratique moyenne telle que définie précédemment.

Encore un autre critère de compression CC, peut être la résolution géométrique de l'image.

Enfin, il est à noter que le critère de compression CC peut être une combinaison, éventuellement linéaire, de plusieurs critères de compression. Par exemple, un critère de compression CC peut s'exprimer sous la forme CC=$\alpha\times$EQM+$\beta\times$TC, où EQM est l'erreur quadratique moyenne donnée précédemment, TC le taux de compression, et $\alpha$ et $\beta$ deux paramètres quelconques.

De la même façon, on peut avoir plusieurs objectifs de compression OC à respecter simultanément.

Par exemple, on peut avoir à respecter EQM < $\alpha$ et $\beta$ < TC < $\chi$.

Il est important de noter que ces critères de compression CC et objectifs de compression OC peuvent varier au cours du temps, notamment ils peuvent être différents d'une image à l'autre ou au sein d'une même image, dans le cas où les données traitées sont des données d'images.

## 2.2. Information caractéristique

L'information caractéristique (IC) peut être de plusieurs formes.

Une première possibilité d'information caractéristique IC est l'entropie H, des données. De façon classique en soi, l'entropie H peut se définir par l'équation suivante :

$$H = \sum_{i=0}^{V-1} p_i \log_2(p_i)$$

dans laquelle V est le cardinal de l'ensemble des valeurs que peuvent prendre les données, et $p_i$ la probabilité d'occurrence de la valeur i dans un ensemble des données.

Dans l'exemple d'une image à 256 niveaux de gris (c'est-à-dire, typiquement, dans laquelle chaque pixel est codé sur 8 bits), V vaut 256, et $p_i$ est égal au nombre de pixels ayant i comme niveau de gris divisé par le nombre total de pixels dans l'échantillon.

L'échantillon de pixels (ou plus généralement de données) qui est pris en compte peut être l'ensemble des données, auquel cas l'entropie calculée est l'entropie pour l'ensemble des données, ou bien un sous-ensemble de données de façon à obtenir une entropie instantanée.

Dans le cas d'une image numérique, encore une fois, on peut définir une autre information caractéristique, appelée complexité et donnée avec les mêmes notations que précédemment par l'expression suivante :

$$\sum_{i=1}^{N_L} \sum_{j=1}^{N_C} \left| 2 x_{i,j} - x_{i,j+1} - x_{i+1,j} \right|$$

ou bien, de façon plus simple et moins avantageuse:

$$\sum_{i=1}^{N_L} \sum_{j=1}^{N_C} \left| x_{i,j} - x_{i,j+1} \right|$$

Cette dernière expression ne permet de calculer la complexité que selon une seule dimension de l'image

Comme précédemment pour l'objectif de compression OC et le critère de compression CC, l'information caractéristique IC peut être une combinaison de différentes informations telles que celles présentées ci-dessus.

L'information caractéristique IC peut être calculée périodiquement, car, dans le cas général, les données n'ont pas une information caractéristique constante au cours du temps.

## 2.3. Paramètre de compression

Le paramètre de compression PC que doit déterminer le moyen de régulation R peut dépendre de l'algorithme de compression qui est mis en oeuvre par le moyen de compression C. En aucune façon, la présente invention ne saurait donc se limiter à un paramètre de compression particulier, de même qu'elle ne se limite pas à un algorithme de compression particulier.

Dans le cas où le moyen de compression C met en oeuvre un procédé de compression de type JPEG *(Joint Photographic Expert Group),* ou tout autre procédé correspondant à une architecture qui comporte un module de quantification tel que décrit précédemment, un paramètre de compression PC efficace peut être le pas de quantification.

Un autre paramètre de compression PC également utilisable peut être un nombre de bits sur lequel les données doivent être arrondies durant une phase de calcul mise en oeuvre par le moyen de compression C.

## 2.4. Relation entre paramètre de compression, objectif de compression et information caractéristique

Le moyen de régulation R doit donc établir une relation entre d'une part le paramètre de compression PC qui est fourni au moyen de compression C, et d'autre part le ou les objectifs de compression OC et la ou les informations caractéristiques IC.

Cette relation peut être de différentes natures, et peut être exprimée de différentes façons.

Une première façon pour exprimer cette relation est d'utiliser une expression mathématique de la fonction g, telle que PC = g(IC, OC).

Une autre possibilité est d'utiliser des abaques, c'est-à-dire des représentations graphiques de la fonction g évoquée ci-dessus, mais déterminées de façon expérimentale, dans la mesure où donner une représentation analytique de la fonction g peut être un problème extrêmement complexe.

Encore une autre possibilité est de donner un ensemble de règles de déduction, ou règles d'inférence selon la terminologie utilisée en programmation logique.

## 3. Moyen de mémorisation

La régulation du moyen de compression C ne permet pas d'obtenir un débit constant quand il s'agit d'une régulation de type qualité image, ou même dans le cas de certaines stratégies de régulation de débit sur un grand nombre d'images.

Aussi, un moyen de mémorisation M est inséré en sortie du dispositif afin de pallier ces variations et de pouvoir transmettre à un moyen de transmission un débit constant.

## 4. Ajout d'une mémoire tampon

Il est possible d'ajouter une mémoire tampon entre le moyen de mémorisation M et le moyen de compression C.

Cela peut être nécessaire lorsque le débit maximum qui sort du moyen de compression C est supérieur à celui qui est actuellement admissible par la technologie du moyen de mémorisation. Ces moyens de mémorisation peuvent classiquement être des mémoires à semi-conducteurs.

La mémoire tampon B permet alors de supprimer les pics de débit.

## Revendications

1. Dispositif de traitement en vue de la transmission de données, notamment de données images, dans un canal de transmission à débit constant, comportant :

   - un moyen de compression (C) desdites données,
   - un moyen de régulation (R) possédant en entrée au moins un objectif de compression (OC) correspondant à au moins un critère de compression (CC), et au moins une mesure d'au moins une information caractéristique (IC) de tout ou partie desdites données, et fournissant audit moyen de compression (C) un paramètre de compression (PC) dépendant exclusivement dudit au moins un objectif de compression (OC) et de ladite au moins une information caractéristique (IC),
   - et un moyen de mémorisation (M) des données sortant dudit moyen de compression (C).

2. Dispositif selon la revendication 1, caractérisé en ce que ledit critère de compression (CC) est formé d'au moins un des éléments suivants :

- une erreur quadratique moyenne,
- un taux de compression,
- un rapport signal à bruit.

3. Dispositif selon l'une des revendications précédentes, caractérisé en ce que ladite information caractéristique (IC) est formée d'au moins un des éléments suivants :

- une mesure de l'entropie desdites données,
- une mesure de complexité desdites données.

4. Dispositif selon l'une des revendications précédentes, caractérisé en ce que ledit paramètre de compression (PC) est un pas de quantification, et en ce que ledit moyen de compression (C) comporte un moyen de quantification ($M_Q$).

5. Dispositif selon l'une des revendications précédentes, caractérisé en ce qu'une mémoire tampon (B) est insérée entre ledit moyen de mémorisation (M) et ledit moyen de compression (C).

EP 0 964 582 A1

**FIG. 1**

**FIG. 2**

**FIG. 3**

**FIG. 4**

C

M

PC

IC

R

OC

**FIG. 5**

$M_D$

$M_Q$

$M_C$

Office européen
des brevets

**RAPPORT DE RECHERCHE EUROPEENNE**

Numéro de la demande

EP 99 40 1149

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PEARLMAN W A: "ADAPTIVE COSINE TRANSFORM IMAGE CODING WITH CONSTANT BLOCK DISTORTION" IEEE TRANSACTIONS ON COMMUNICATIONS, vol. 38, no. 5, 1 mai 1990 (1990-05-01), pages 698-703, XP000136888 * abrégé * * figure 1 * * alinéa '00II! * | 1-5 | H04N7/30 |
| X | US 4 581 638 A (CHIARIGLIONE LEONARDO ET AL) 8 avril 1986 (1986-04-08) * abrégé * * colonne 2, ligne 13 - ligne 53 * | 1-5 | |
| D,A | EP 0 631 443 A (CENTRE NAT ETD SPATIALES) 28 décembre 1994 (1994-12-28) * abrégé * * page 6, ligne 14 - ligne 49 * | 1-5 | |
| A | US 5 170 264 A (SAITO OSAMU ET AL) 8 décembre 1992 (1992-12-08) * abrégé; figure 1 * | 1-5 | DOMAINES TECHNIQUES RECHERCHES (Int.Cl.6) H04N |
| A | DALGIC I ET AL: "CONSTANT QUALITY VIDEO ENCODING" COMMUNICATIONS - GATEWAY TO GLOBALIZATION. PROCEEDINGS OF THE CONFERENCE ON COMMUNICATIONS, SEATTLE, JUNE 18 - 22, 1995, vol. 2, 18 juin 1995 (1995-06-18), pages 1255-1261, XP000533181 INSTITUTE OF ELECTRICAL AND ELECTRONICS ENGINEERS * abrégé * * figure 4 * * alinéa 'III.III! * | 1-5 | |

Le présent rapport a été établi pour toutes les revendications

| Lieu de la recherche | Date d'achèvement de la recherche | Examinateur |
|---|---|---|
| LA HAYE | 23 juillet 1999 | Berbain, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 1149

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-07-1999

| Document brevet cité au rapport de recherche | | Date de publication | Membre(s) de la famille de brevet(s) | | Date de publication |
|---|---|---|---|---|---|
| US 4581638 | A | 08-04-1986 | CA | 1246733 A | 13-12-1988 |
| | | | DE | 3378246 A | 17-11-1988 |
| | | | EP | 0100916 A | 22-02-1984 |
| | | | JP | 59067789 A | 17-04-1984 |
| EP 0631443 | A | 28-12-1994 | FR | 2707070 A | 30-12-1994 |
| | | | AT | 175834 T | 15-01-1999 |
| | | | DE | 69415874 D | 25-02-1999 |
| | | | DE | 69415874 T | 01-07-1999 |
| US 5170264 | A | 08-12-1992 | JP | 2203673 A | 13-08-1990 |
| | | | JP | 2638179 B | 06-08-1997 |
| | | | JP | 2262785 A | 25-10-1990 |
| | | | JP | 2552349 B | 13-11-1996 |
| | | | JP | 2158285 A | 18-06-1990 |
| | | | DE | 3940554 A | 13-06-1996 |

EPO FORM P0460

Pour tout renseignement concernant cette annexe : voir Journal Officiel de l'Office européen des brevets, No.12/82